# EUROPEAN PATENT APPLICATION

(11) **EP 4 723 712 A1**
(43) Date of publication of application: **08.04.2026**
(21) Application number: 24858576.2
(22) Date of filing: 27.08.2024
(51) Int. Cl.: H04W 12/122

(54) **VERIFICATION METHOD, VERIFICATION DEVICE, AND VEHICLE**

(30) Priority: 30.08.2023 CN 202311109315
(71) Applicant: Shenzhen Yinwang Intelligent Technologies Co., Ltd., Shenzhen, Guangdong 518110 (CN)
(72) Inventor: HONG, Jiaqi, Shenzhen, Guangdong 518129 (CN); LIANG, Yu, Shenzhen, Guangdong 518129 (CN); WEI, Zhuo, Shenzhen, Guangdong 518129 (CN); LIU, Yifeng, Shenzhen, Guangdong 518129 (CN)
(74) Representative: MERH-IP Matias Erny Reichl Hoffmann Patentanwälte PartG mbB
(86) International application number: PCT/CN2024/114903
(87) International publication number: WO 2025/045042

(57) **Abstract**

This application provides a verification method, a verification apparatus, and a transportation means. The method may be applied to the field of vehicles. The method includes: obtaining a first event; receiving first request information sent by a second module, where the first request information is used to request to verify validity of a first control instruction, and the first control instruction is associated with a first input; determining that a duration between a first moment and a second moment is less than or equal to a first preset duration, where the first moment is associated with a moment at which the first event occurs, and the second moment is associated with a moment at which the first request information is received; and sending first response information to the second module, where the first response information indicates that validity verification of the first control instruction succeeds. According to the foregoing method, validity of the first control instruction can be verified based on the moment at which the first event occurs and the moment at which the first request information is received, to prevent an unauthorized vehicle control instruction from being sent to a corresponding module or component for execution.

## Description

This application claims priority to Chinese Patent Application No. 202311109315.5, filed with the China National Intellectual Property Administration on August 30, 2023 and entitled "VERIFICATION METHOD, VERIFICATION APPARATUS, AND TRANSPORTATION MEANS", which is incorporated herein by reference in its entirety.

### TECHNICAL FIELD

This application relates to the field of vehicles, and more specifically, to a verification method, a verification apparatus, and a transportation means.

### BACKGROUND

As intelligent vehicles are widely used in daily life, users expect that the intelligent vehicles can bring more comfortable user experience. The intelligent vehicle allows users to deliver vehicle control instructions through human-machine interaction. The vehicle control instructions may include control instructions for a vehicle body, for example, control instructions for doors, windows, the air conditioner, and seats, or the vehicle control instructions may include a control instruction for a switch of a power domain. A human-machine interaction system of the vehicle was initially deployed to enrich entertainment experience of drivers and passengers, which leads to its integration within an infotainment domain system of the vehicle.

However, the infotainment domain system of the vehicle is exposed to risks of intrusion by attackers due to presence of abundant third-party applications and networked services. Therefore, in a case in which the infotainment domain system of the vehicle is intruded into or even compromised by the attackers, how to ensure security of the vehicle control instruction is an urgent problem to be resolved.

### SUMMARY

This application provides a verification method, a verification apparatus, and a transportation means, to prevent an unauthorized control instruction from being sent to a corresponding module or component for execution in a case in which an infotainment domain system of the transportation means is intruded or even compromised by attackers, thereby improving system security of the transportation means.

According to a first aspect, a verification method is provided. The method is applied to a first module, and the method includes: obtaining a first event; receiving first request information sent by a second module, where the first request information is used to request to verify validity of a first control instruction, and the first control instruction is associated with a first input; determining that a duration between a first moment and a second moment is less than or equal to a first preset duration, where the first moment is associated with a moment at which the first event occurs, and the second moment is associated with a moment at which the first request information is received; and sending first response information to the second module, where the first response information indicates that validity verification of the first control instruction succeeds.

Optionally, the first module may be a trusted module or a checking module, and the checking module may include a vehicle control scenario checking module.

Optionally, the first event may be a human-machine interaction event. When the first module is the trusted module, the first module may directly obtain the first event. When the first module is the checking module, the first module may obtain the first event from another module (for example, the trusted module).

Optionally, the first control instruction may be a vehicle control instruction. The vehicle control instruction may include a control instruction for a vehicle body, for example, a control instruction for a door, a window, an air conditioner, and a seat, or the control instruction may include a control instruction for a switch of a power domain.

Optionally, the second moment may be a moment at which the first module receives the first request information. Alternatively, the second moment may be understood as a moment at which the second module sends the first request information. Alternatively, the second moment may be understood as a moment at which the first control instruction is generated.

In a possible implementation, the obtaining the first event may further include: obtaining the first event and the first moment.

In a possible implementation, when determining that the duration between the first moment and the second moment is greater than the first preset duration, the first module may send second response information to the second module. The second response information indicates that the validity verification of the first control instruction fails.

In this embodiment of this application, validity of the first control instruction can be verified based on the moment at which the first event occurs and the moment at which the first request information is received, to prevent an unauthorized control instruction from being sent to a corresponding module or component for execution, thereby improving system security of the transportation means.

With reference to the first aspect, in some implementations of the first aspect, before the determining that the duration between the first moment and the second moment is less than or equal to the first preset duration, the method further includes: verifying that the first request information is associated with the first event.

Optionally, detecting that the first request information is associated with the first event may be understood as detecting that the first request information is generated based on the first event.

In this embodiment of this application, when it is detected that the first request information is associated with the first event, the first module verifies validity of the first control instruction based on the moment at which the first event occurs and the moment at which the first request information is received. In this way, an unauthorized control instruction can be further prevented from being sent to a corresponding module or component for execution, thereby better ensuring secure running of components in the transportation means.

With reference to the first aspect, in some implementations of the first aspect, the first response information includes a signature result, and the signature result includes a signature for the first moment.

Optionally, the first module may sign the first moment to obtain a signature result, and include the signature result in the first response information.

Optionally, the signature result may include a signature for the first event.

In this embodiment of this application, the first module may send the first response information to the second module, and include the signature for the first moment in the first response information. The second module may send the signature result to a module and a component that execute the control instruction, so that the module or the component that executes the control instruction may determine, based on the signature result, whether to execute the first control instruction. In this way, an unauthorized first control instruction may be further prevented from being executed by a corresponding module or component, thereby preventing a more severe consequence caused after an attacker intrudes the transportation means.

With reference to the first aspect, in some implementations of the first aspect, the first event includes: input from a physical button, input from a touchscreen, or input from voice interaction.

With reference to the first aspect, in some implementations of the first aspect, the first event includes the input from the voice interaction, and the obtaining the first event includes: detecting a preset keyword, where the preset keyword includes a wakeup word or a preset control instruction; and obtaining the first event based on the preset keyword.

Optionally, the wakeup word may be a keyword including a name of a voice assistant.

In this embodiment of this application, when the first module detects that a user has an intention of interacting with the voice assistant, the first module obtains the first event, and verifies the validity of the first control instruction based on a moment corresponding to the first event. In this way, an unauthorized control instruction can be further prevented from being sent to a corresponding module or component for execution. In addition, when the first module does not detect that the user has an intention to interact with the voice assistant, the voice assistant may be put into a dormant state, thereby reducing a risk that voice interaction of the user is intercepted by the attacker.

With reference to the first aspect, in some implementations of the first aspect, before the detecting the preset keyword, the method further includes: detecting, based on a digital signal processor DSP or a high-fidelity Hi-Fi chip, whether the voice interaction includes the preset keyword.

According to a second aspect, a verification method is provided. The method is applied to a second module, and the method includes: generating a first control instruction, where the first control instruction is associated with a first input; and sending the first control instruction to a third module if a first event exists within a first preset duration, where the first preset duration is associated with a first moment and a second moment, the first moment is associated with a moment at which the first event occurs, the second moment is associated with the first control instruction, and the first event is associated with the first input.

Optionally, the second module may be an instruction generation module, and the instruction generation module may include a vehicle control hardware abstraction layer (hardware abstraction layer, HAL) and/or a vehicle control service module.

Optionally, that the first control instruction is associated with the first input may be understood as that the first control instruction is generated based on the first input, and the first input may be related to the first event, or the first input may be an input from an attacker.

Optionally, that the second moment is associated with the first control instruction may be understood as that the second moment is a moment at which the first control instruction is generated.

In this embodiment of this application, after the second module generates the first control instruction, if the first event exists within the first preset duration, the second module may send the first control instruction to the third module, so that the third module executes the first control instruction. In this way, an unauthorized control instruction can be prevented from being sent to the third module for execution, and system security of the transportation means can be improved.

With reference to the second aspect, in some implementations of the second aspect, before the sending the first control instruction to the third module, the method further includes: sending first request information to a first module, where the first request information is used to request to verify validity of the first control instruction; and receiving first response information sent by the first module, where the first response information indicates that validity verification of the first control instruction succeeds, and that the validity verification of the first control instruction succeeds includes that the first event exists within the first preset duration.

Optionally, after the second module receives second response information sent by the first module, the second module may not send the first control instruction to the third module. The second response information indicates that the validity verification of the first control instruction fails.

In this embodiment of this application, the second module may request the first module to verify validity of the first control instruction, and send the first control instruction to the third module when the first control instruction is authorized. In this way, a module for verifying the first control instruction is separated from a module for sending the first control instruction, so that each module can focus on a task of the module, which helps to manage and control the control instruction more effectively, thereby preventing an unauthorized control instruction from being sent to the third module for execution.

With reference to the second aspect, in some implementations of the second aspect, before the sending the first control instruction to the third module, the method further includes: querying whether the first event exists within the first preset duration.

Optionally, when the second module finds that the first event exists within the first preset duration, the second module may send the first control instruction to the third module; or otherwise, the second module may not send the first control instruction to the third module.

In this embodiment of this application, the second module may query whether the first control instruction is authorized. In this way, an unauthorized control instruction can be prevented from being sent to a corresponding third module for execution.

With reference to the second aspect, in some implementations of the second aspect, the method further includes: sending a signature result to the third module, where the signature result includes a signature for the first moment.

Optionally, the signature result further includes a signature for the first event.

In this embodiment of this application, the second module may send the signature result to the third module, and the signature result includes the signature for the first moment, so that the third module may determine, based on the signature result, whether to execute the first control instruction. In this way, an unauthorized first control instruction can be further prevented from being executed by the third module, thereby preventing a more severe consequence caused after the attacker intrudes a transportation means.

With reference to the second aspect, in some implementations of the second aspect, before the sending the signature result to the third module, the method further includes: receiving the signature result sent by the first module.

Optionally, the first module may send the first response information to the second module, and include the signature result in the first response information.

According to a third aspect, a verification method is provided. The method is applied to a third module, and the method includes: receiving a first control instruction sent by a second module; and executing the first control instruction if a first event exists within a first preset duration. The first preset duration is associated with a first moment and a second moment, the first moment is associated with a moment at which the first event occurs, the second moment is associated with the first control instruction, and the first event is associated with the first input.

Optionally, the third module may be located in a vehicle domain controller (vehicle domain controller, VDC).

In this embodiment of this application, after receiving the first control instruction, the third module executes the first control instruction if the first event exists within the first preset duration. In this way, the third module can be prevented from executing an unauthorized control instruction, and system security of the transportation means is ensured.

With reference to the third aspect, in some implementations of the third aspect, before executing the first control instruction, the method further includes: receiving a signature result sent by the second module, where the signature result includes a signature for the first moment; and determining that a duration between the first moment and a third moment is less than or equal to a second preset duration, where the third moment is associated with a moment at which the first control instruction is received.

Optionally, after receiving the signature result, the third module may decrypt the signature result by using a key, to obtain the first moment.

Optionally, when the duration between the first moment and the third moment is greater than the second preset duration, the third module may not execute the first control instruction.

In this embodiment of this application, the third module may determine, based on the first moment included in the signature result and the third moment at which the first control instruction is received, whether to execute the first control instruction. In this way, the third module can be further prevented from executing an unauthorized control instruction, causing unnecessary losses to a user.

With reference to the third aspect, in some implementations of the third aspect, the first event includes: input from a physical button, input from a touchscreen, or input from voice interaction.

According to a fourth aspect, a verification apparatus is provided. The apparatus includes: an obtaining unit, configured to obtain a first event; a transceiver unit, configured to receive first request information sent by a second module, where the first request information is used to request to verify validity of a first control instruction, and the first control instruction is associated with a first input; and a processing unit, configured to determine that a duration between a first moment and a second moment is less than or equal to a first preset duration. The first moment is associated with a moment at which the first event occurs, and the second moment is associated with a moment at which the first request information is received. The transceiver unit is further configured to send first response information to the second module. The first response information indicates that validity verification of the first control instruction succeeds.

With reference to the fourth aspect, in some implementations of the fourth aspect, the processing unit is further configured to verify that the first request information is associated with the first event.

With reference to the fourth aspect, in some implementations of the fourth aspect, the first response information includes a signature result, and the signature result includes a signature for the first moment.

With reference to the fourth aspect, in some implementations of the fourth aspect, the first event includes: input from a physical button, input from a touchscreen, or input from voice interaction.

With reference to the fourth aspect, in some implementations of the fourth aspect, the obtaining unit is specifically configured to: detect a preset keyword, where the preset keyword includes a wakeup word or a preset control instruction; and obtain the first event based on the preset keyword.

With reference to the fourth aspect, in some implementations of the fourth aspect, the processing unit is further configured to detect, based on a digital signal processor DSP or a high-fidelity Hi-Fi chip, whether the voice interaction includes the preset keyword.

According to a fifth aspect, a verification apparatus is provided. The apparatus includes: a processing unit, configured to generate a first control instruction, where the first control instruction is associated with a first input; and a transceiver unit, configured to send the first control instruction to a third module if a first event exists within a first preset duration. The first preset duration is associated with a first moment and a second moment, the first moment is associated with a moment at which the first event occurs, the second moment is associated with the first control instruction, and the first event is associated with the first input.

With reference to the fifth aspect, in some implementations of the fifth aspect, the transceiver unit is further configured to: send first request information to a first module, where the first request information is used to request to verify validity of the first control instruction; and receive first response information sent by the first module, where the first response information indicates that validity verification of the first control instruction succeeds, and that the validity verification of the first control instruction succeeds includes that the first event exists within the first preset duration.

With reference to the fifth aspect, in some implementations of the fifth aspect, the processing unit is further configured to query whether the first event exists within the first preset duration.

With reference to the fifth aspect, in some implementations of the fifth aspect, the transceiver unit is further configured to send a signature result to the third module. The signature result includes a signature for the first moment, and the first moment is associated with a moment at which the first event occurs.

With reference to the fifth aspect, in some implementations of the fifth aspect, the transceiver unit is further configured to receive the signature result sent by the first module.

According to a sixth aspect, a verification apparatus is provided. The apparatus includes: a transceiver unit, configured to receive a first control instruction sent by a second module; and a processing unit, configured to execute the first control instruction if a first event exists within a first preset duration. The first preset duration is associated with a first moment and a second moment, the first moment is associated with a moment at which the first event occurs, the second moment is associated with the first control instruction, and the first event is associated with the first input.

With reference to the sixth aspect, in some implementations of the sixth aspect, the transceiver unit is further configured to receive a signature result sent by the second module. The signature result includes a signature for the first moment, and the first moment is associated with a moment at which the first event occurs. The processing unit is further configured to determine that a duration between the first moment and a third moment is less than or equal to a second preset duration. The third moment is associated with a moment at which the first control instruction is received.

With reference to the sixth aspect, in some implementations of the sixth aspect, the first event includes: input from a physical button, input from a touchscreen, or input from voice interaction.

According to a seventh aspect, a verification apparatus is provided, including at least one processor and a memory. The at least one processor is coupled to the memory, and is configured to read and execute instructions in the memory, to enable the apparatus to implement the method according to any one of the implementations of the first aspect to the third aspect.

According to an eighth aspect, a computer-readable storage medium is provided. The computer-readable storage medium stores program code. When the computer program code is run on a computer, the computer is enabled to perform the method according to any one of the implementations of the first aspect to the third aspect.

According to a ninth aspect, a chip is provided. The chip includes a circuit. The circuit is configured to perform the method according to any one of the implementations the first aspect to the third aspect.

According to a tenth aspect, a computer program product is provided. The computer product includes a computer program. When the computer program is run, a computer is enabled to perform the method according to any one of the implementations of the first aspect to the third aspect.

According to an eleventh aspect, a transportation means is provided, including the apparatus in any one of the implementations of the fourth aspect or the sixth aspect.

### BRIEF DESCRIPTION OF DRAWINGS

FIG. 1 is a functional diagram of a transportation means according to an embodiment of this application;
FIG. 2 is a schematic flowchart of automatic parking according to an embodiment of this application;
FIG. 3 shows a system architecture to which a verification method is applicable according to an embodiment of this application;
FIG. 4 is a schematic flowchart of a verification method according to an embodiment of this application;
FIG. 5 shows another system architecture to which a verification method is applicable according to an embodiment of this application;
FIG. 6 is a schematic flowchart of another verification method according to an embodiment of this application;
FIG. 7 shows another system architecture to which a verification method is applicable according to an embodiment of this application;
FIG. 8 is a schematic flowchart of another verification method according to an embodiment of this application;
FIG. 9 is a schematic flowchart of voice processing in an intelligent cockpit according to an embodiment of this application;
FIG. 10(a)-1 to FIG. 10(c)-2 show a scenario to which a verification method according to an embodiment of this application is applicable;
FIG. 11 shows a verification apparatus according to an embodiment of this application; and
FIG. 12 shows another verification apparatus according to an embodiment of this application.

### DESCRIPTION OF EMBODIMENTS

The following describes technical solutions of this application with reference to accompanying drawings.

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following" or a similar expression thereof indicates any combination of these items, including a single item or any combination of a plurality of items. For example, at least one of a, b, or c may indicate a, b, c, a and b, a and c, b and c, or a, b, and c, where a, b, and c may be singular or plural.

In embodiments of this application, prefix words such as "first" and "second" are used only to distinguish between different described objects, and do not limit locations, a sequence, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation.

The following describes technical solutions of embodiments in this application with reference to accompanying drawings.

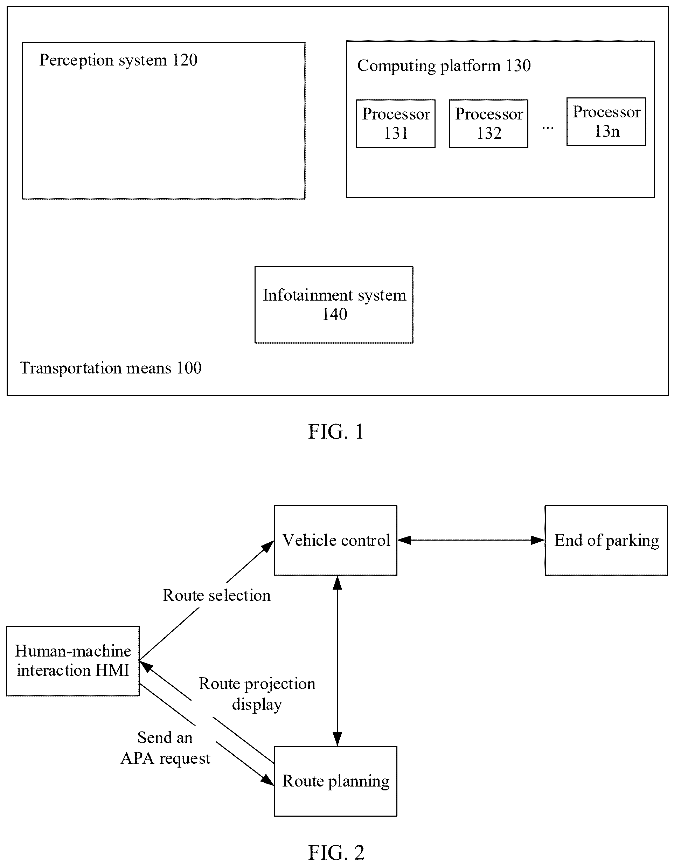

FIG. 1 is a functional diagram of a transportation means 100 according to an embodiment of this application.

The transportation means 100 may include a plurality of subsystems, for example, a perception system 120, a computing platform 130, and a key management system 140. Optionally, the transportation means 100 may include more or fewer subsystems, and each subsystem may include one or more components. In addition, all the subsystems and components of the transportation means 100 may be interconnected in a wired or wireless manner.

The perception system 120 may include several types of sensors configured to sense information about an ambient environment of the transportation means 100. For example, the perception system 120 may include a positioning system. The positioning system may be a global positioning system (global positioning system, GPS), a BeiDou system, or another positioning system. The perception system 120 may include one or more of an inertial measurement unit (inertial measurement unit, IMU), a lidar, a millimeter-wave radar, an ultrasonic radar, and a camera apparatus.

Some or all functions of the transportation means 100 may be controlled by the computing platform 130. The computing platform 130 may include processors 131 to 13n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 130 may further include a memory. The memory is configured to store instructions. Some or all of the processors 131 to 13n may invoke the instructions in the memory, to implement a corresponding function.

The computing platform 130 may control the functions of the transportation means 100 based on inputs received from the subsystems (for example, the perception system 120). In some embodiments, the computing platform 130 may be configured to control many aspects of the transportation means 100 and the subsystems of the transportation means 100.

The infotainment system 140 may provide entertainment and human-machine interaction functions, and provide comfortable, pleasant, and interactive seating experience for drivers and passengers, thereby enhancing a functionality and an intelligence level of a vehicle. Optionally, the infotainment system 140 may also be located in the computing platform 130.

Optionally, the foregoing components are merely examples. During actual application, the components in the foregoing modules may be added or deleted based on an actual requirement.

The transportation means 100 in this application may include a land transportation means, a water transportation means, an air transportation means, an industrial device, an agricultural device, an entertainment device, or the like. For example, the transportation means 100 may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), an entertainment device, or a toy vehicle. A type of the vehicle is not specifically limited in embodiments of this application. For another example, the transportation means 100 may be a transportation means such as an aircraft or a ship.

The following uses an example in which the transportation means 100 is a vehicle, to describe a technical problem that needs to be resolved in this application and the technical solutions used in this application.

As intelligent vehicles are widely used in daily life, users expect that the intelligent vehicles can bring more comfortable user experience. The intelligent vehicle allows the users to deliver vehicle control instructions through human-machine interaction. The vehicle control instruction may include a control instruction for a vehicle body, for example, a control instruction for a door, a window, an air conditioner, and a seat, or the vehicle control instruction includes a control instruction for a switch of a power domain. A human-machine interaction system of the vehicle is initially deployed to enrich entertainment experience of drivers and passengers, which leads to deployment of the human-machine interaction system in an infotainment domain system of the vehicle.

For example, in an automatic parking service shown in FIG. 2, a user may send an automatic parking request through a human-machine interface (human-machine interface, HMI) in a cockpit, and a vehicle performs route planning and feeds back the route planning to the user. After the user selects a route, the vehicle may start automatic parking. In this process, the user may interact with the vehicle through a touchscreen or voice.

However, the human-machine interaction system of the vehicle is initially deployed to enrich entertainment experience of drivers and passengers, which leads to deployment of the human-machine interaction system in the infotainment domain system of the vehicle. However, the infotainment domain system of the vehicle is exposed to risks of intrusion by attackers due to presence of abundant third-party applications and networked services. Therefore, in a case in which the infotainment domain system of the vehicle is intruded into or even compromised by the attackers, how to ensure security of the vehicle control instruction is an urgent problem to be resolved.

Embodiments of this application provide a verification method, a verification apparatus, and a transportation means, to prevent an unauthorized control instruction from being sent to a corresponding module or component for execution in a case in which an infotainment domain system of the transportation means is intruded or even compromised by the attackers, thereby improving system security of the transportation means.

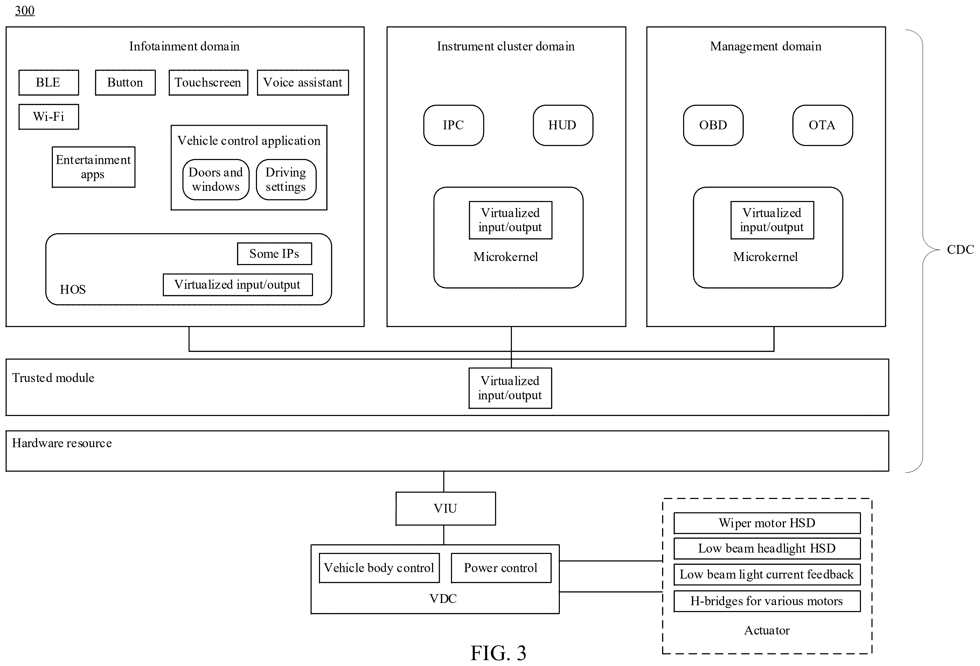

FIG. 3 shows a system architecture to which a verification method is applicable according to an embodiment of this application. The system architecture may be used in the transportation means 100 in FIG. 1.

As shown in FIG. 3, the architecture includes an infotainment domain, a management domain, and an instrument cluster domain.

In the infotainment domain, a user may initiate a vehicle control request through a physical button, a touchscreen, or a voice assistant. After being processed by the infotainment domain, the vehicle control request may be converted into a vehicle control instruction. The vehicle control instruction reaches a corresponding VDC or an intelligent driving domain controller (multi domain controller, MDC) through a vehicle interface unit (vehicle interface unit, VIU). After receiving the vehicle control instruction for verification, the VDC or the MDC may send the vehicle control instruction to a corresponding electronic control unit (electronic control unit, ECU) for execution. The vehicle control instruction may include a control instruction for a vehicle body, for example, an instruction for opening a door or a window, or the vehicle control instruction may include a control instruction for a power domain, for example, an instruction for automatic parking or cruise assistance.

In the instrument cluster domain, an instrument panel cluster (instrument panel cluster, IPC) and a head-up display (head-up display, HUD) may be included. A vehicle may provide, through the IPC and the HUD, drivers with critical vehicle information, including a speed, a rotation speed, a mileage, a fuel status, a warning light, audio control, and the like. The IPC and the HUD are used to help the drivers understand and control a vehicle status, to improve driving safety and convenience.

In the management domain, on-board diagnostics (on-board diagnostics, OBD) and an over-the-air (over the air, OTA) technology may be included, and functions such as vehicle diagnosis, remote maintenance, software update, security management, and data analysis may be provided. The OBD and the OTA can provide a more convenient, efficient, and secure vehicle management and maintenance method for vehicle manufacturers, maintenance service providers, and vehicle owners.

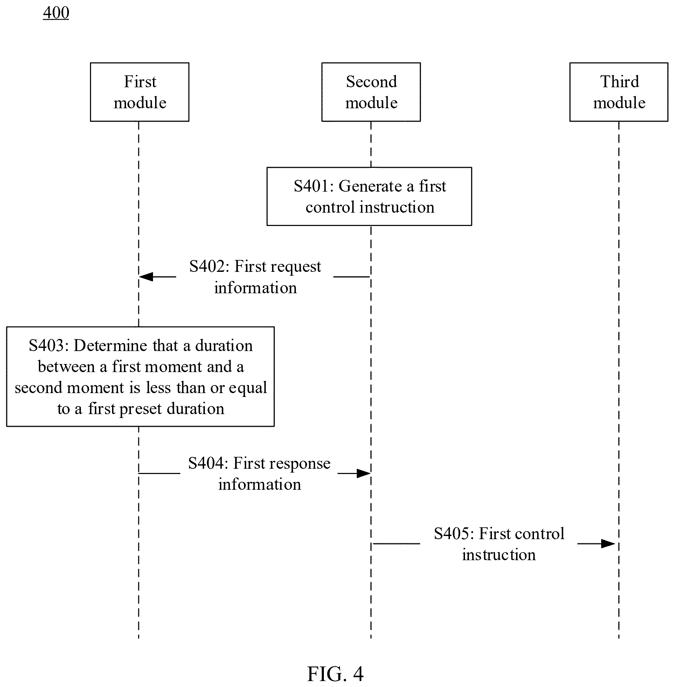

FIG. 4 is a schematic flowchart of the verification method according to an embodiment of this application. The method 400 may be applied to an architecture 300, and the method 400 may include step S401 to step S405.

S401: A second module generates a first control instruction.

For example, the second module may be an instruction generation module. The instruction generation module may include a vehicle control hardware abstraction layer and/or a vehicle control service module. The first control instruction may be associated with a first input.

Optionally, the first control instruction may be a vehicle control instruction. The vehicle control instruction may include a control instruction for a vehicle body, for example, a control instruction for a door, a window, an air conditioner, and a seat, or the control instruction may include a control instruction for a switch of a power domain.

S402: The second module sends first request information to a first module.

The first request information is used to request to verify validity of the first control instruction. The first module may be a trusted module or a checking module, and the checking module may include a vehicle control scenario checking module.

In an embodiment, before step S402, the first module may obtain a first event, or obtain a first event and a first moment, so that the first module determines validity of the first control instruction based on the first moment. The first moment is associated with a moment at which the first event occurs.

Optionally, the first event may be a human-machine interaction event. When the first module is the trusted module, the first module may directly obtain the first event. When the first module is the checking module, the first module may obtain the first event from another module (for example, the trusted module).

Optionally, the first event may include: input from a physical button, input from a touchscreen, or input from voice interaction.

In an embodiment, when the first event includes the input from the voice interaction, before the obtaining the first event, the first module may detect whether the input from the voice interaction includes a preset keyword. When the input from the voice interaction includes the preset keyword, the first module may obtain the first event. In this way, an unauthorized control instruction can be further prevented from being sent to a third module for execution. In addition, when the first module detects that the user has an intention to interact with the voice assistant, the voice assistant may be put into a dormant state, thereby reducing a risk that voice interaction of the user is intercepted by an attacker.

Optionally, the preset keyword includes a wakeup word or a preset control instruction.

Optionally, the wakeup word may be a keyword including a name of the voice assistant.

In an embodiment, a digital signal processor DSP or a high-fidelity Hi-Fi chip may be used to detect whether the voice interaction includes the preset keyword.

S403: The first module determines that a duration between the first moment and a second moment is less than or equal to a first preset duration.

The first preset duration may be associated with the first moment and the second moment. The first moment may be associated with the first event. For example, the first moment is a moment at which the first event occurs. The second moment may be a moment at which the first module receives the first request information. Alternatively, the second moment may be understood as a moment at which the second module sends the first request information. Alternatively, the second moment may be understood as a moment at which the first control instruction is generated.

Optionally, the first preset duration may be set to 1 second.

In an embodiment, before step S403, the first module may verify that the first request information is associated with the first event. In this way, an unauthorized control instruction can be further prevented from being sent to a corresponding module or component for execution, thereby better ensuring secure running of components in the transportation means.

In an embodiment, the second module may alternatively locally query validity of the first control instruction, to determine whether to send the first control instruction to the third module. Specifically, the second module may not perform step S402. Instead, in step S403, the second module itself determines that the duration between the first moment and the second moment is less than or equal to the first preset duration.

S404: The first module sends first response information to the second module.

The first response information indicates that validity verification of the first control instruction succeeds.

In an embodiment, the first response information includes a signature result, and the signature result includes a signature for the first moment. The signature result may facilitate a third component in determining, based on the signature result, whether to execute the first control instruction. In this way, an unauthorized first control instruction may be further prevented from being executed by a corresponding module or component, thereby preventing a more severe consequence caused after the attacker intrudes the transportation means.

Optionally, the first module may sign the first moment to obtain a signature result, and include the signature result in the first response information.

Optionally, the signature result further includes a signature for the first event.

In an embodiment, when step S403 is replaced with that the first module determines that the duration between the first moment and the second moment is greater than the first preset duration, in step S404, the first module may send second response information to the second module. The second response information indicates that the validity verification of the first control instruction fails, and the second module may not perform step S405.

S405: The second module sends the first control instruction to the third module.

The third module may be located in the VDC of the transportation means.

In this embodiment of this application, the first module can verify validity of the first control instruction based on the moment at which the first event occurs and the moment at which the first request information is received, to prevent an unauthorized control instruction from being sent to a corresponding module or component for execution, thereby improving system security of the transportation means.

After receiving the first control instruction, the third module may perform different processing.

In an embodiment, if the first event exists within the first preset duration, the third module may execute the first control instruction.

In an embodiment, after receiving the signature result sent by the second module, the third module may decrypt the signature result by using a key, to obtain the first moment. After determining that the duration between the first moment and the third moment is less than or equal to a second preset duration, the third module may execute the first control instruction; or otherwise, the third module does not execute the first control instruction. The third moment is associated with a moment at which the third module receives the first control instruction. In this way, use of the signature result can further prevent the third module from executing an unauthorized control instruction, causing unnecessary losses to the user.

It should be understood that in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

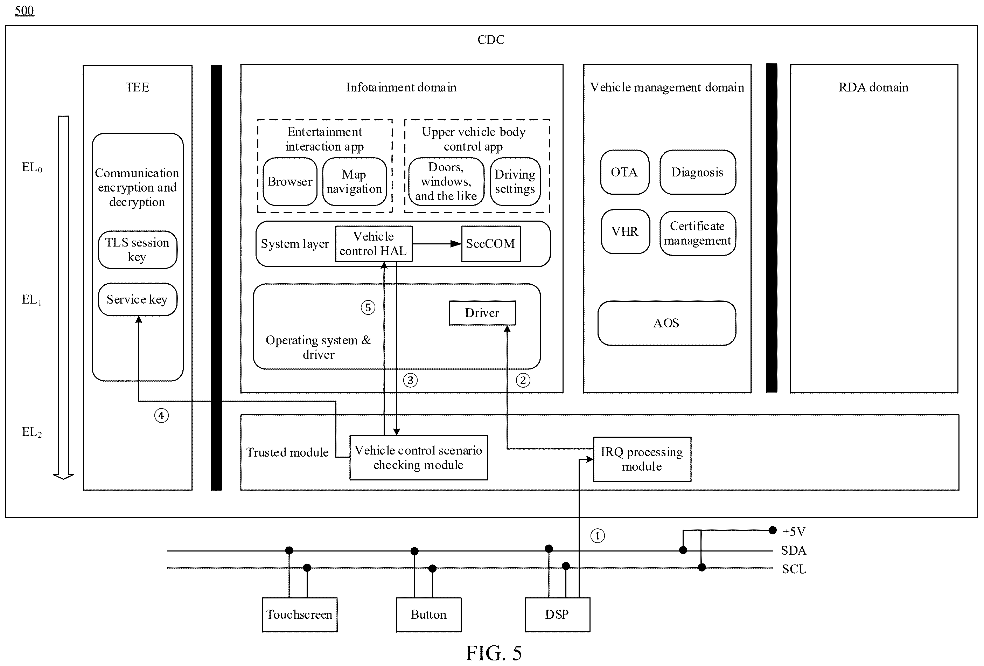

FIG. 5 shows another system architecture to which the verification method according to an embodiment of this application is applicable. The system architecture 500 may be a specific description of an intelligent cockpit controller (cockpit domain controller, CDC) in the architecture 200.

As shown in FIG. 5, the architecture 500 includes a trusted execution environment (trusted execution environment, TEE), an infotainment domain, a vehicle management domain, an instrument cluster domain (RDA), and a trusted module.

The TEE may be a secure computing environment, and provides reliability and isolation for an application. The application may be run in a trusted environment, so that the application is isolated from another application and operating system. The TEE may include a communication encryption module, and the communication encryption module may store a transport layer security (transport layer security, TLS) session key and a service key.

The infotainment domain may provide an entertainment function and a human-machine interaction function, including: an interactive entertainment application (application, APP), an upper vehicle body control app, a system layer, an operating system, and a driver.

The vehicle management domain may be used to support remote vehicle update, fault diagnosis, vehicle health report generation, secure communication, operating system management, and certificate management.

The instrument cluster domain can provide drivers with critical vehicle information, including a speed, a rotation speed, a mileage, a fuel status, a warning light, audio control, and the like, to improve travelling safety and convenience.

The trusted module may include a vehicle control scenario checking module and an interrupt signal (interrupt request, IRQ) processing module, and is configured to check execution of a vehicle control instruction and correctly process requests of various components or modules, to ensure stability and reliability of a CDC system.

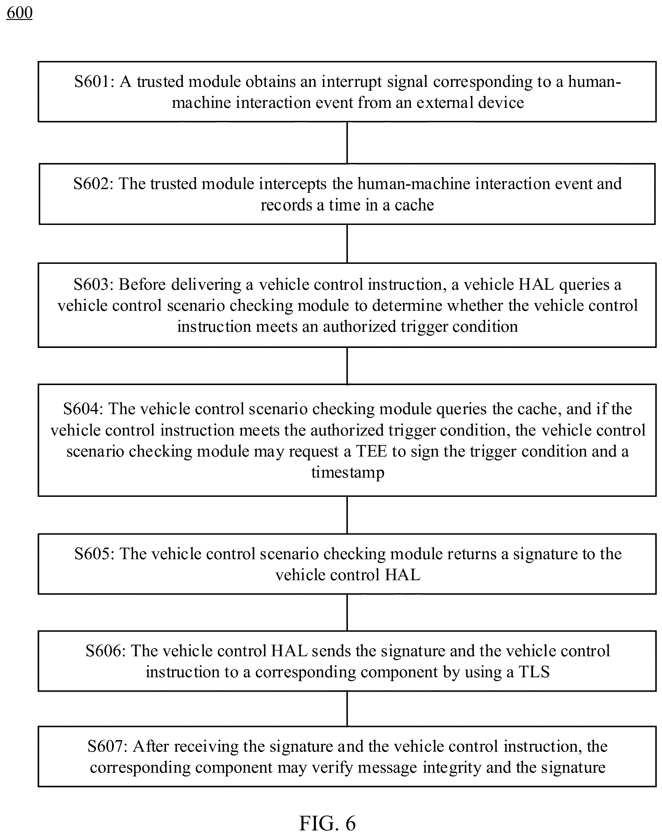

FIG. 6 is a schematic flowchart of another verification method according to an embodiment of this application. A method 600 may be applied to the architecture 500. The method 600 is specific descriptions of steps in the method 400. The method 600 may include step S601 to step S607.

S601: A trusted module obtains an interrupt signal corresponding to a human-machine interaction event from an external device.

Specifically, after a user performs a touchscreen operation, the interrupt signal may be sent to the trusted module at an exception level (exception level, EL₂). The step may correspond to ① in the architecture 500, and the human-machine interaction event may be the first event in the method 400.

Optionally, the external device may include one or more of a physical button, a display touchscreen, a DSP, and Hi-Fi.

In a possible implementation, in a scenario in which the external device includes the physical button, the interrupt signal is sent to a CPU after the physical button is pressed. By configuring a control register (hypervisor configuration register, HCR) of the trusted module, the interrupt signal is first sent to the trusted module corresponding to EL₂, and then routed to a corresponding virtual machine by the trusted module, and a driver in the virtual machine parses the interrupt signal. In this process, after receiving the interrupt signal, the trusted module may update a time corresponding to a button interrupt in a cache, and the foregoing process may be transparent to an operating system and an upper-layer application in the virtual machine.

In a possible implementation, in a scenario in which the external device includes a display touchscreen, after the display touchscreen is tapped by the user, the interrupt signal may be sent to the CPU. Same as the physical button scenario, after receiving the interrupt signal, the trusted module may update a latest time of the touchscreen in the cache, and then inject the interrupt signal into the virtual machine by writing to a (Link Register, LR) register. The interrupt signal is processed by the driver in the virtual machine. The LR register may be configured to notify the CPU of an ID corresponding to an interrupt signal for interaction with the external device. Injecting the interrupt signal into the virtual machine may be understood as writing the ID of the interrupt signal into the LR register.

In a possible implementation, in a scenario in which the external device includes a DSP or high fidelity (high-fidelity, Hi-Fi), a keyword recognition algorithm may be deployed on the DSP for security and privacy. After recognizing the keyword, the DSP may indicate, by using the interrupt signal, the CPU to obtain audio data from an audio buffer, and perform further semantic parsing and interaction on the audio data. In this process, after receiving the interrupt signal, the trusted module may refresh a latest time of the voice interaction in the cache.

S602: The trusted module intercepts the human-machine interaction event and records a time in the cache.

Specifically, the trusted module may respond to the interrupt signal, and record an interrupt type and a timestamp in the cache. This step may correspond to ② in the architecture 500, and the timestamp may correspond to the first moment in the method 400.

S603: Before delivering a vehicle control instruction, the vehicle control hardware abstraction layer (hardware abstraction layer, HAL) queries a vehicle control scenario checking module to determine whether the vehicle control instruction meets an authorized trigger condition.

Specifically, the foregoing step may correspond to ③ in the architecture 500. The vehicle control instruction may be the first control instruction in the method 400, and the vehicle control scenario checking module may be the first module in the method 400.

Optionally, the vehicle control HAL may send first request information to the vehicle control scenario checking module to query validity of the vehicle control instruction.

S604: The vehicle control scenario checking module queries the cache, and if the vehicle control instruction meets the authorized trigger condition, the vehicle control scenario checking module may request a TEE to sign the trigger condition and the timestamp.

Specifically, the foregoing step may correspond to ④ in the architecture 500.

Optionally, that the vehicle control instruction meets the authorized trigger condition may be understood as follows: The vehicle control instruction is authorized, that is, the vehicle control scenario checking module determines that a duration between a moment at which the human-machine interaction event occurs and a moment at which the first control instruction is received is less than or equal to a first preset duration.

Optionally, that the vehicle control scenario checking module signs the authorized trigger condition and the timestamp may be understood as signing the moment at which the human-machine interaction event occurs and/or the human-machine interaction event.

In an embodiment, if at least one valid scenario is detected within the first preset duration, the vehicle control scenario checking module may determine that the vehicle control instruction meets the authorized trigger condition. A specific value of the first preset duration may be determined based on time overheads of a service. For example, the preset threshold may be set to 1 second. The foregoing valid scenario may be a scenario such as a physical button, touchscreen interaction, or voice interaction.

Optionally, for a vehicle control instruction that can be invoked in a plurality of scenarios, if one of the scenarios meets the authorized trigger condition, it may be determined that the vehicle control instruction meets the authorized trigger condition. For example, for an instruction "Open the window", a physical button, touchscreen interaction, or voice interaction may all be invoked. In this case, in the foregoing three scenarios, if the vehicle control scenario checking module determines that a duration between a moment at which any human-machine interaction event occurs and a moment at which the first request information is received is less than or equal to the first preset duration, the instruction "Open the window" meets the authorized trigger condition.

Optionally, for a vehicle control instruction that can be invoked only in a specific scenario, it can be determined that the vehicle control instruction meets the authorized trigger condition only when a duration between a moment corresponding to a human-machine interaction event that occurs in the specific scenario and a moment at which the first control instruction is received is less than or equal to a preset duration. For example, an instruction "Automatic parking" needs to be initiated by the user by tapping the touchscreen. In this case, a touchscreen event needs to occur, and a duration between a moment at which the touchscreen event occurs and a moment at which the first control instruction is received is less than or equal to a preset duration, so that the vehicle control instruction can be considered as meeting the authorized trigger condition.

Alternatively, the vehicle control scenario checking module may sign the trigger condition and the timestamp by using a stored service key.

S605: The vehicle control scenario checking module returns the signature to the vehicle control HAL.

Specifically, the foregoing step may correspond to ⑤ in the architecture 500.

S606: The vehicle control HAL sends the signature and the vehicle control instruction to a corresponding component by using a TLS.

Optionally, the corresponding component may be a VDC or an MDC, and the corresponding component may include the third module in the method 400.

Optionally, the vehicle control HAL may send the signature and the vehicle control instruction to a secure communication (secure communication, SecCOM) module, and then the SecCOM module sends the signature and the vehicle control instruction to a corresponding component.

S607: After receiving the signature and the vehicle control instruction, the corresponding component may verify message integrity and the signature.

Specifically, a corresponding component decrypts the signature by using a key, to obtain a moment at which the human-machine interaction event occurs. When a duration between the moment at which the human-machine interaction event occurs and a moment at which the vehicle control instruction is received is less than or equal to a second preset threshold, the corresponding component may execute the vehicle control instruction.

In this embodiment of this application, the vehicle scenario checking module can verify validity of the vehicle control instruction based on the moment at which the human-machine interaction event occurs and the moment at which the first request information is received, to prevent an unauthorized vehicle control instruction from being sent to a corresponding component for execution, thereby improving system security of a vehicle. In addition, the corresponding component may decrypt the signature result to obtain the moment at which the human-machine interaction event occurs, and determine, based on the moment at which the human-machine interaction event occurs and the moment at which the vehicle control instruction is received, whether to execute the vehicle control instruction. In this way, the corresponding component can be further prevented from executing an unauthorized control instruction, causing unnecessary losses to the user.

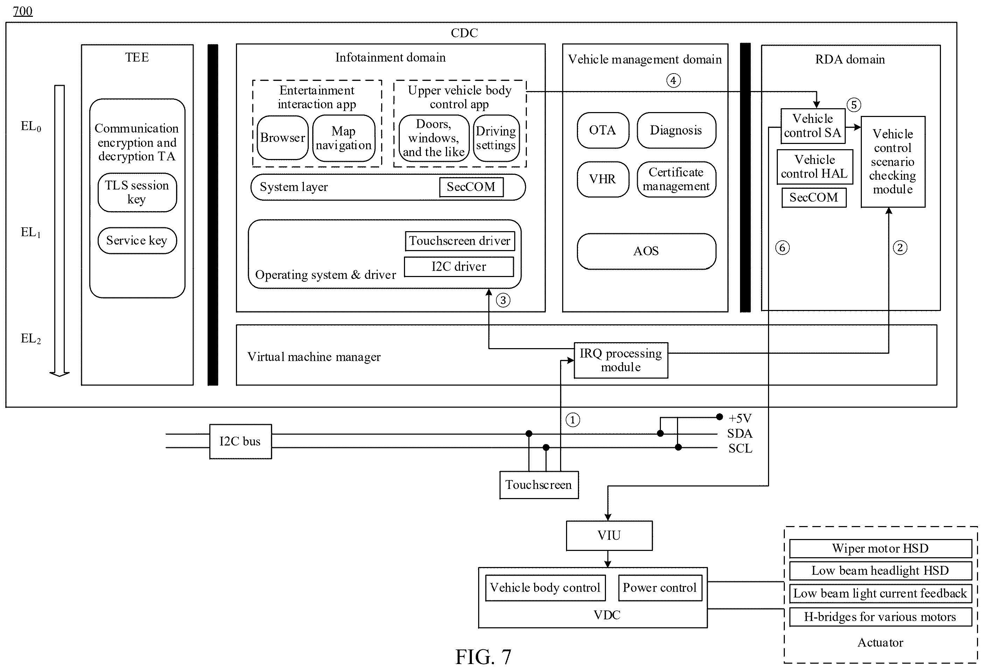

FIG. 7 shows another system architecture to which the verification method according to an embodiment of this application is applicable. The system architecture 700 may be a specific description of a CDC in the architecture 200.

A difference between the architecture 700 and the architecture 500 lies in that a vehicle control service module (service, SA) and a vehicle control HAL may be migrated to a secure virtual machine, for example, an instrument cluster domain. All vehicle control instructions can be delivered by the secure virtual machine. The secure virtual machine includes an independent preset key, and another non-secure virtual machine cannot send a vehicle control instruction by impersonating the secure virtual machine. The vehicle control service module determines whether the vehicle control instruction meets an authorized trigger condition. If the vehicle control instruction meets the authorized trigger condition, the vehicle control instruction is allowed to be delivered securely; or otherwise, the vehicle control instruction is not delivered, and the malicious instruction is terminated in the CDC, without a need for further verification by related components.

Functions of components in the architecture 700 are described in detail in the architecture 500, and details are not described herein again.

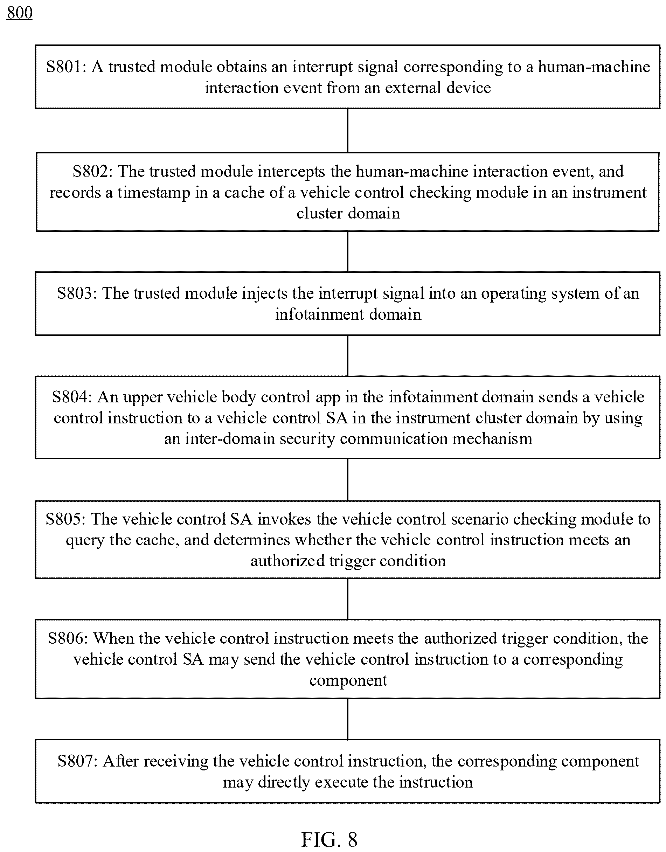

FIG. 8 is a schematic flowchart of another verification method according to an embodiment of this application. A method 800 may be applied to the architecture 700. The method 800 may be specific descriptions of steps in the method 400. The method 800 may include step S801 to step S807.

S801: A trusted module obtains an interrupt signal corresponding to a human-machine interaction event from an external device.

Specifically, after a user performs a touchscreen operation, the interrupt signal may be sent to the trusted module at an exception level (exception level, EL₂). The step may correspond to ① in the architecture 700, and the human-machine interaction event may be the first event in the method 400.

Optionally, the external device may include one or more of a physical button, a display touchscreen, a DSP, and Hi-Fi.

In a possible implementation, in a scenario in which the external device includes the physical button, the interrupt signal is sent to a CPU after the physical button is pressed. By configuring an HCR of the trusted module, the interrupt signal is first sent to the trusted module corresponding to EL₂, and then routed to a corresponding virtual machine by the trusted module, and a driver in the virtual machine parses the interrupt signal. In this process, after receiving the interrupt signal, the trusted module may update a time corresponding to a button interrupt in a cache, and the foregoing process may be transparent to an operating system and an upper-layer application in the virtual machine.

In a possible implementation, in a scenario in which the external device includes a display touchscreen, after the display touchscreen is tapped by the user, the interrupt signal may be sent to the CPU. Same as the physical button scenario, after receiving the interrupt signal, the trusted module may update a latest time of the touchscreen in the cache, and then inject the interrupt signal into the virtual machine by writing to an LR register. The interrupt signal is processed by the driver in the virtual machine. The LR register may be configured to notify the CPU of an ID corresponding to an interrupt signal for interaction with the external device. Injecting the interrupt signal into the virtual machine may be understood as writing the ID of the interrupt signal into the LR register.

In a possible implementation, in a scenario in which the external device includes a DSP or Hi-Fi, a keyword recognition algorithm may be deployed on the DSP for security and privacy. After recognizing the keyword, the DSP may indicate, by using the interrupt signal, the CPU to obtain audio data from an audio buffer, and perform further semantic parsing and interaction on the audio data. In this process, after receiving the interrupt signal, the trusted module may refresh a latest time of the voice interaction in the cache.

S802: The trusted module intercepts the human-machine interaction event, and records a timestamp in a cache of a vehicle control checking module in an instrument cluster domain.

Specifically, the trusted module may respond to the interrupt signal, and record an interrupt type and the timestamp in the cache of the vehicle control checking module in the instrument cluster domain. This step may correspond to ② in the architecture 700, and the timestamp may correspond to the first moment in the method 400.

S803: The trusted module injects the interrupt signal into an operating system of an infotainment domain.

Specifically, this step may correspond to ③ in the architecture 700.

S804: An upper vehicle body control app in the infotainment domain sends a vehicle control instruction to a vehicle control SA in the instrument cluster domain by using an interdomain security communication mechanism.

Specifically, this step may correspond to ④ in the architecture 700.

S805: The vehicle control SA invokes the vehicle control scenario checking module to query the cache, and determines whether the vehicle control instruction meets an authorized trigger condition.

Specifically, this step may correspond to ⑤ in the architecture 700.

In an embodiment, the vehicle control SA may locally invoke the vehicle control scenario checking module for query, and determine whether the vehicle control instruction meets the authorized trigger condition.

In an embodiment, the vehicle control SA may send first request information to the vehicle control scenario checking module, to request the vehicle control scenario checking module to determine whether the vehicle control instruction meets the authorized trigger condition.

Optionally, that the vehicle control instruction meets the authorized trigger condition may be understood as follows: The vehicle control instruction is authorized, that is, the vehicle control scenario checking module determines that a duration between a moment at which the human-machine interaction event occurs and a moment at which the first control instruction is received is less than or equal to a first preset duration.

In an embodiment, if at least one valid scenario is detected within the first preset duration, the vehicle control scenario checking module may determine that the vehicle control instruction meets the authorized trigger condition. A specific value of the first preset duration may be determined based on time overheads of a service. For example, the preset threshold may be set to 1 second. The foregoing valid scenario may be a scenario such as a physical button, touchscreen interaction, or voice interaction.

Optionally, for a vehicle control instruction that can be invoked in a plurality of scenarios, if one of the scenarios meets the authorized trigger condition, it may be determined that the vehicle control instruction meets the authorized trigger condition. For example, for an instruction "Open the window", a physical button, touchscreen interaction, or voice interaction may all be invoked. In this case, in the foregoing three scenarios, if the vehicle control scenario checking module determines that a duration between a moment at which any human-machine interaction event occurs and a moment at which the first request information is received is less than or equal to the first preset duration, the instruction "Open the window" meets the authorized trigger condition.

Optionally, for a vehicle control instruction that can be invoked only in a specific scenario, it can be determined that the vehicle control instruction meets the authorized trigger condition only when a duration between a moment corresponding to a human-machine interaction event that occurs in the specific scenario and a moment at which the first control instruction is received is less than or equal to the first preset duration. For example, an instruction "Automatic parking" needs to be initiated by the user tapping the touchscreen. In this case, a touchscreen event needs to occur, and a duration between a moment at which the touchscreen event occurs and a moment at which the first control instruction is received is less than or equal to the first preset duration, so that the vehicle control instruction can be considered as meeting the authorized trigger condition.

S806: When the vehicle control instruction meets the authorized trigger condition, the vehicle control SA may send the vehicle control instruction to a corresponding component.

Specifically, this step may correspond to ⑥ in the architecture 700.

Optionally, the corresponding component may be a VDC or an MDC.

S807: After receiving the vehicle control instruction, the corresponding component may directly execute the instruction.

In this embodiment of this application, the vehicle scenario checking module or the vehicle control SA can verify validity of the vehicle control instruction based on the moment at which the human-machine interaction event occurs and the moment at which the first request information is received, to prevent an unauthorized vehicle control instruction from being sent to a corresponding component for execution, thereby improving system security of a vehicle. In addition, the vehicle control SA and a vehicle control HAL are migrated to the instrument cluster domain, and the vehicle control instructions are all delivered by the instrument cluster domain. The instrument cluster domain has its own independent key, and another virtual machine cannot impersonate the instrument cluster domain to send the vehicle control instruction. Therefore, security of the vehicle control instruction can be further improved.

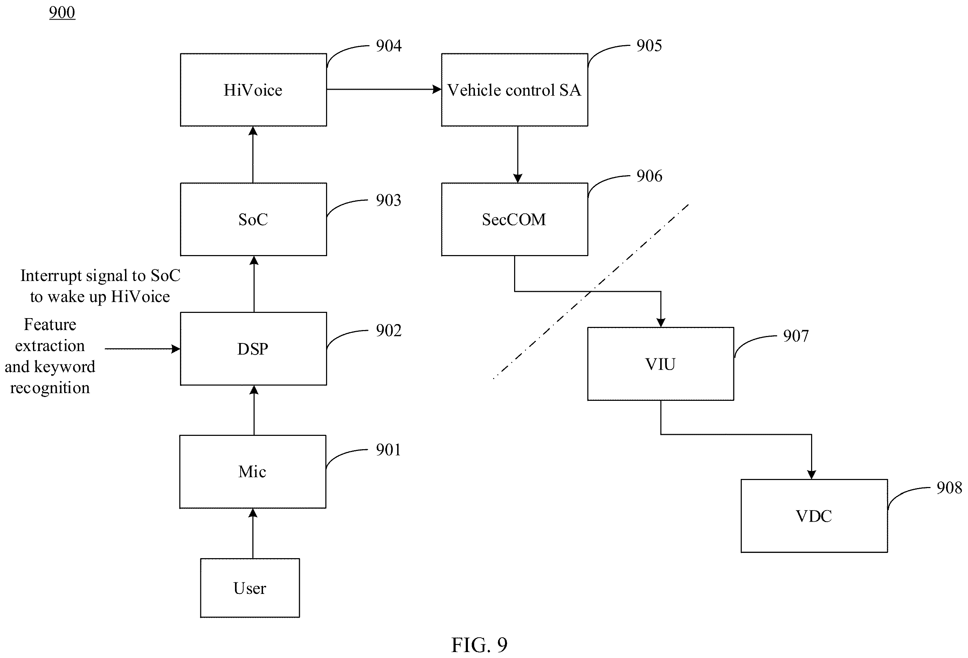

FIG. 9 is a schematic flowchart of voice processing in an intelligent cockpit according to an embodiment of this application, which may be a specific description of a voice interaction input manner in the method 400. The method 900 may include the following steps.

S901: A microphone (microphone, Mic) obtains voice interaction information of a user, and sends the voice interaction information to a DSP for processing.

S902: After recognizing a wakeup keyword from the voice interaction information, the DSP sends an interrupt signal to a system-on-a-chip (system-on-a-chip, SoC).

Alternatively, the DSP may identify whether the voice interaction information includes a preset control instruction. After identifying that the voice interaction information includes the preset control instruction, the DSP may send the interrupt signal to the SoC for processing. The preset control instruction is used to generate a vehicle control instruction.

Alternatively, in step S902, if the DSP does not recognize the wakeup keyword from the voice interaction information, the DSP may discard the voice interaction information. In this case, a voice assistant may be in a dormant state, and does not parse the voice interaction information of the user in the vehicle, thereby protecting user privacy.

Optionally, the wakeup keyword may be understood as a name of the voice assistant included in the voice interaction information of the user.

S903: After receiving the interrupt signal, the SoC may wake up HiVoice.

HiVoice may be a voice recognition and voice control platform, and is used to implement a voice interaction function. HiVoice is capable of recognizing voice interaction information of the user and convert the voice interaction information into a corresponding operation instruction.

S904: HiVoice recognizes the voice interaction information, converts the voice interaction information into a vehicle control instruction, and sends the vehicle control instruction to a vehicle control SA.

S905: The vehicle control SA performs validity check on the vehicle control instruction, and after the check succeeds, the vehicle control SA sends the vehicle control instruction to a SecCOM.

That the vehicle control SA performs the validity check on the vehicle control instruction may be the same as validity checking steps in the method 600 and the method 800.

S906: The SecCOM forwards the vehicle control instruction to a VIU.

S907: The VIU performs format conversion on the vehicle control instruction, and sends a converted vehicle control instruction to a VDC.

S908: After receiving the vehicle control instruction, the VDC may directly execute the vehicle control instruction.

Optionally, in this step, after receiving the vehicle control instruction, the VDC may verify integrity of the vehicle control instruction, and execute the vehicle control instruction when verification succeeds.

In this embodiment of this application, whether the user has an intention to interact with the voice assistant may be determined by identifying whether the wakeup keyword is included in the voice interaction information issued by the user, and then the vehicle control instruction is generated based on the voice interaction information of the user. In this manner, the voice assistant avoids parsing the voice interaction information of the user at all time, and a possibility that a voice parsing result is stolen by an intruder is reduced, thereby improving privacy security of the user.

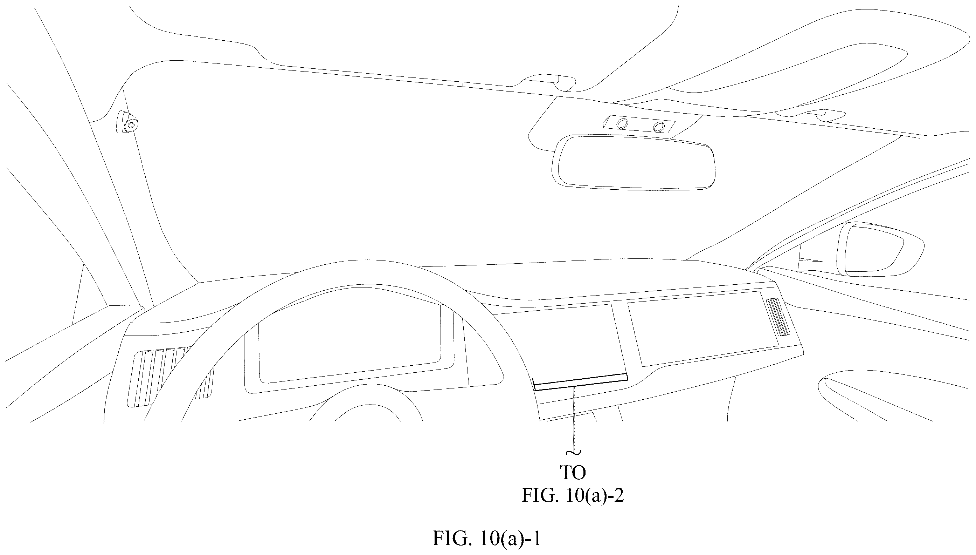

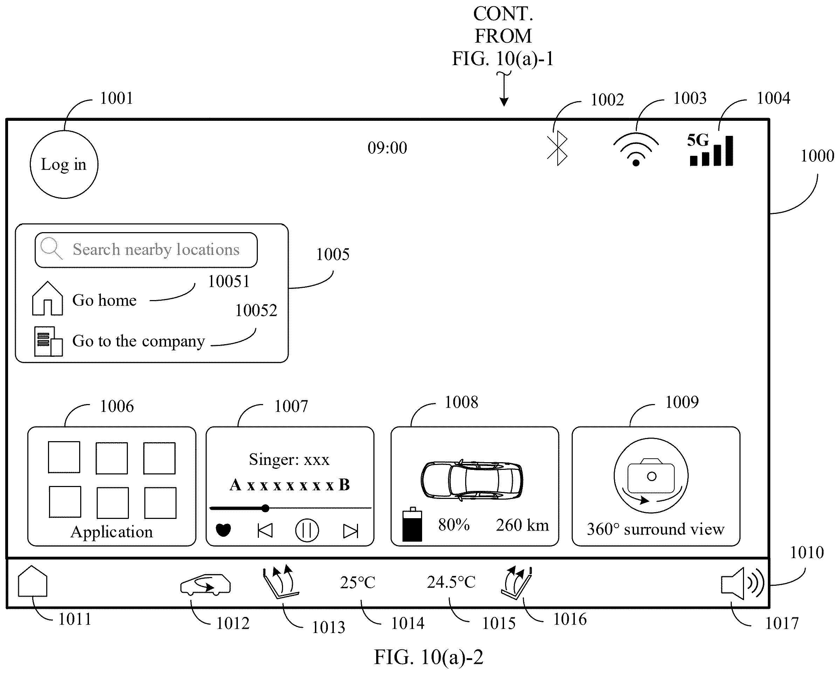

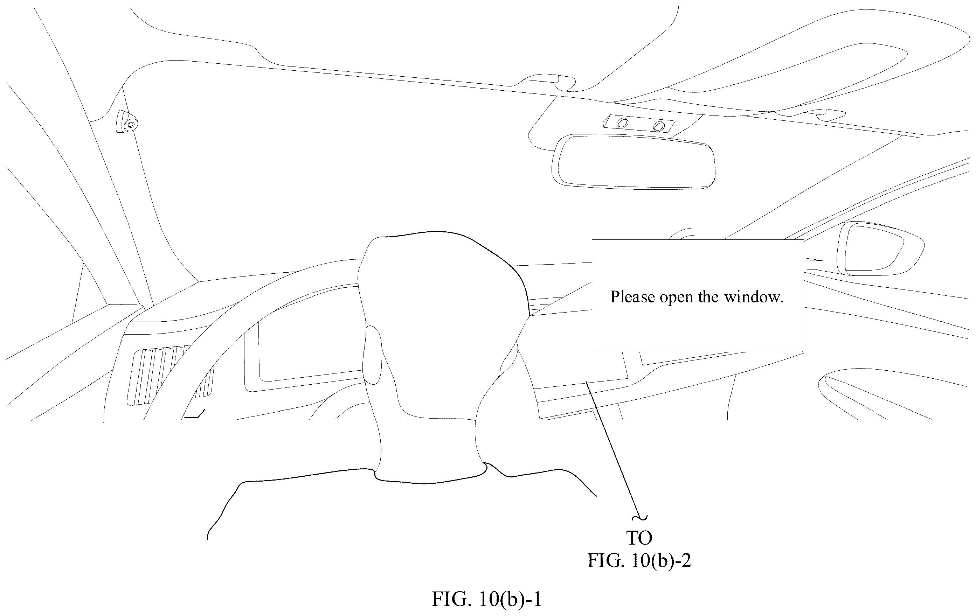

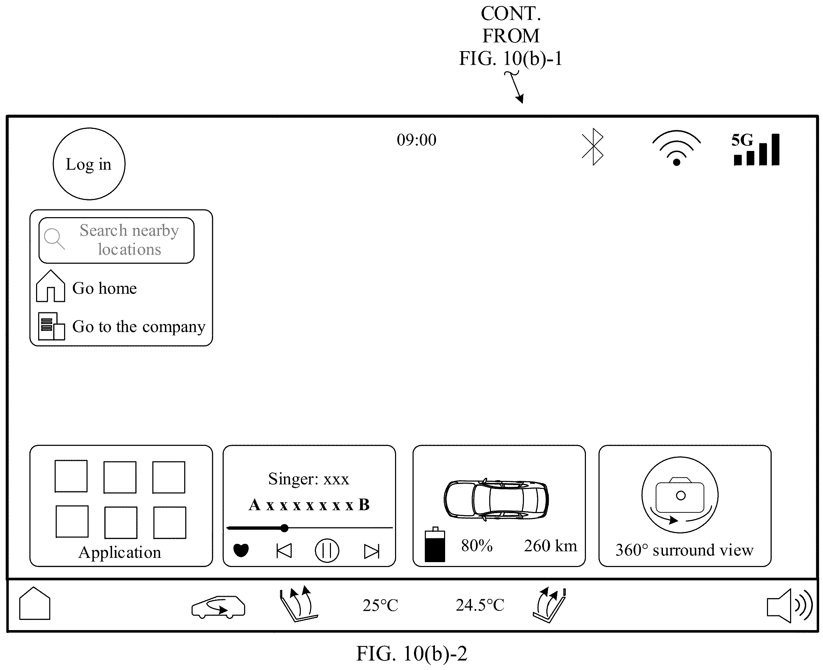

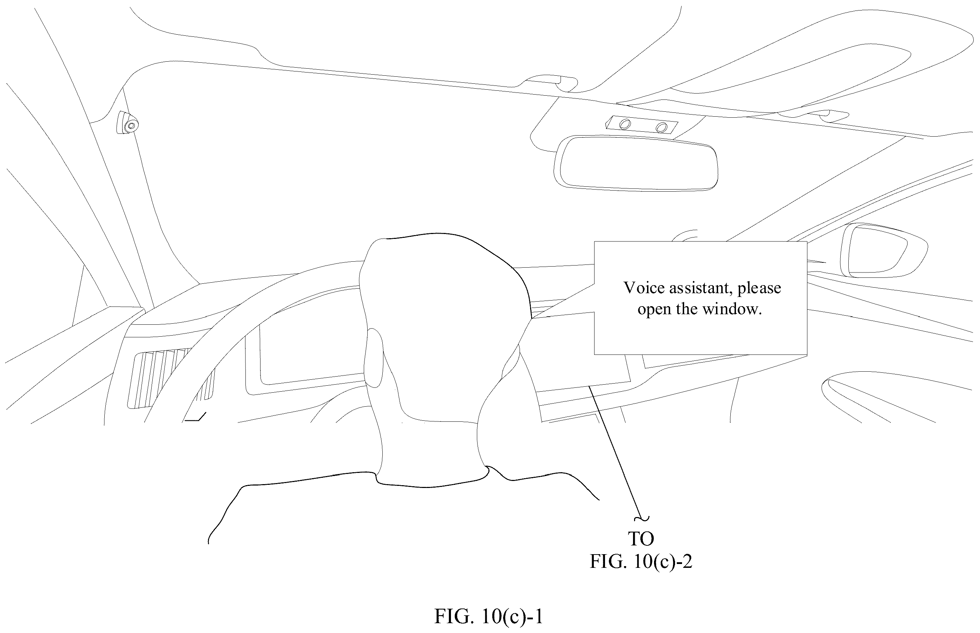

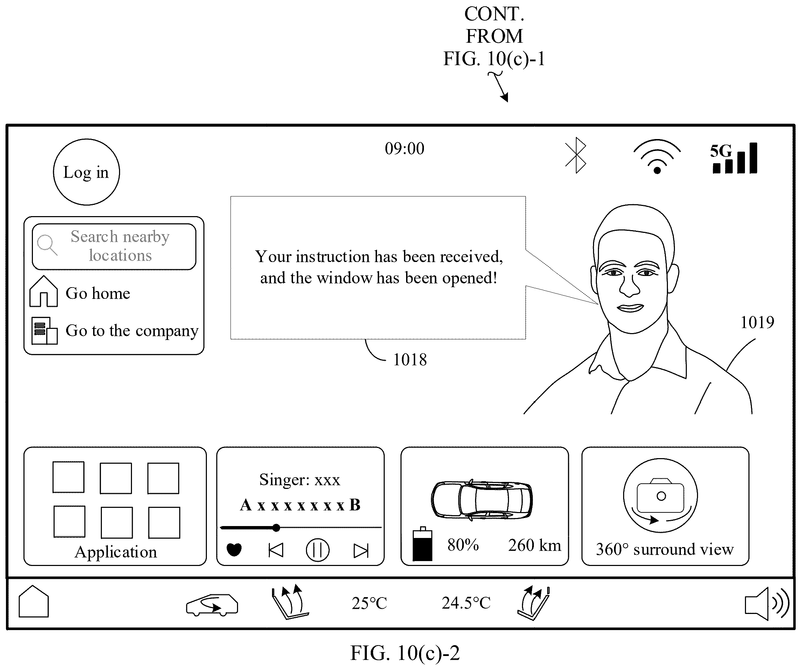

FIG. 10(a)-1 to FIG. 10(c)-2 show a scenario to which the verification method according to an embodiment of this application is applicable. The method 900 may be applied to the scenario.

As shown in FIG. 10(a)-1 and FIG. 10(a)-2, a large central display of a vehicle displays a display interface 1000 and a function bar 1010. The display interface 1000 includes user account login information 1001 (an account is not logged in to the current vehicle), a Bluetooth function icon 1002, a Wi-Fi function icon 1003, a cellular network signal icon 1004, an in-vehicle map application search box 1005, a card 1006 for displaying all applications installed on the vehicle, a card 1007 for switching to display an in-vehicle music application, a card 1008 for displaying a state of charge and a remaining traveling range of the vehicle, and a card 1009 for displaying a 360-degree (°) surround view function of the vehicle. The in-vehicle map application search box 1005 may include a Go home control 10051 and a Go to the company control 10052 that are set by a user. The function bar 1010 includes an icon 1011 for switching to display a desktop of the large central display, a vehicle inside air icon 1012, and a driver's seat heating function icon 1013, a driver area air conditioning temperature display icon 1014, a front passenger area air conditioning temperature display icon 1015, a front passenger's seat heating function icon 1016, and a volume setting icon 1017.

As shown in FIG. 10(b)-1 and FIG. 10(b)-2, a user issues a voice instruction "Please open the window" inside the vehicle. Because a DSP in the vehicle does not recognize a wakeup keyword, the DSP directly discards the voice data, and a voice assistant is in a dormant state.

As shown in FIG. 10(c)-1 and FIG. 10(c)-2, the user issues a voice instruction "Voice assistant, please open the window" inside the vehicle. Because the DSP inside the vehicle recognizes the wakeup keyword, subsequent audio processing and semantic parsing may be performed, to generate a vehicle control instruction. After the vehicle executes the vehicle control instruction, a voice assistant 1019 and a voice text 1018 may be displayed on the display interface 1000, to prompt the user that "Your instruction has been received, and the window has been opened".

In this embodiment of this application, whether the user has an intention to interact with the voice assistant can be determined by identifying whether voice interaction information issued by the user includes the wakeup keyword, to generate a vehicle control instruction for the voice interaction information of the user. By using this method, continuous parsing of voice interaction information of the user by the voice assistant may be avoided, thereby reducing a risk that a voice parsing result is exploited by an intruder, and enhancing a privacy security level of the user.

It should be understood that in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

Embodiments of this application further provide an apparatus configured to implement any one of the foregoing methods. The apparatus includes units configured to implement steps performed by the transportation means 100 in any one of the foregoing methods.

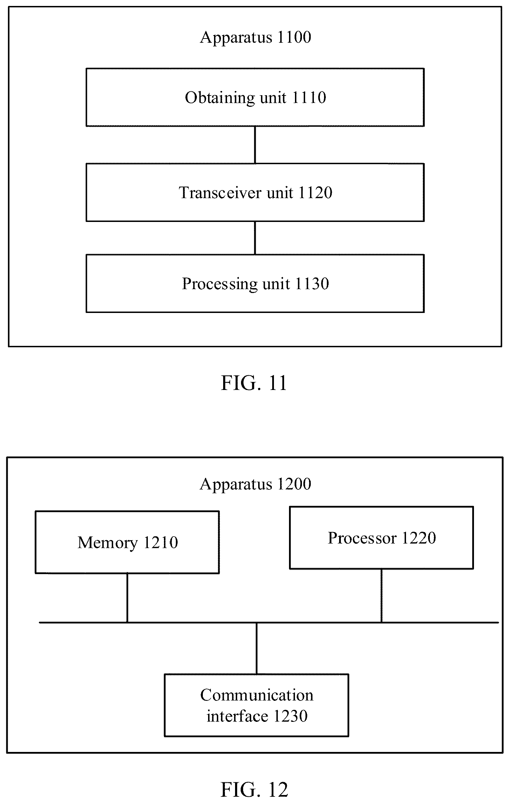

FIG. 11 is a diagram of a verification apparatus 1100 according to an embodiment of this application. The apparatus 1100 may include an obtaining unit 1110, a transceiver unit 1120, and a processing unit 1130. The obtaining unit 1110 is configured to obtain instructions and/or data. The transceiver unit 1120 is configured to receive and send instructions and/or data. The obtaining unit 1110 and the transceiver unit 1120 may also be referred to as a communication interface or a communication unit. The processing unit 1130 is configured to perform data processing, so that the apparatus 1100 implements the foregoing verification method.

Optionally, the apparatus 1100 may further include a storage unit, configured to implement a corresponding storage function, and store corresponding instructions and/or data.

In a design, the apparatus 1100 may perform the steps performed by the first module in the foregoing embodiments.

The apparatus 1100 includes: an obtaining unit 1110, configured to obtain a first event; a transceiver unit 1120, configured to receive first request information sent by a second module, where the first request information is used to request to verify validity of a first control instruction, and the first control instruction is associated with a first input; and a processing unit 1130, configured to determine that a duration between a first moment and a second moment is less than or equal to a first preset duration. The first moment is associated with a moment at which the first event occurs, and the second moment is associated with a moment at which the first request information is received. The transceiver unit 1120 is further configured to send first response information to the second module. The first response information indicates that validity verification of the first control instruction succeeds.

In a possible implementation, the processing unit 1130 is further configured to verify that the first request information is associated with the first event.

In a possible implementation, the first response information includes a signature result, and the signature result includes a signature for the first moment.

In a possible implementation, the first event includes: input from a physical button, input from a touchscreen, or input from voice interaction.

In a possible implementation, the obtaining unit 1110 is specifically configured to: detect a preset keyword, where the preset keyword includes a wakeup word or a preset control instruction; and obtain the first event based on the preset keyword.

In a possible implementation, the processing unit 1130 is further configured to detect, based on a digital signal processor DSP or a high-fidelity Hi-Fi chip, whether the voice interaction includes the preset keyword.

In a design, the apparatus 1100 may perform the steps performed by the second module in the foregoing embodiments.

The apparatus 1100 includes: a processing unit 1130, configured to generate a first control instruction, where the first control instruction is associated with a first input; and a transceiver unit 1120, configured to send the first control instruction to a third module if a first event exists within a first preset duration. The first preset duration is associated with a first moment and a second moment, the first moment is associated with a moment at which the first event occurs, the second moment is associated with the first control instruction, and the first event is associated with the first input.

In a possible implementation, the transceiver unit 1120 is further configured to: send first request information to a first module, where the first request information is used to request to verify validity of the first control instruction; and receive first response information sent by the first module, where the first response information indicates that validity verification of the first control instruction succeeds, and that the validity verification of the first control instruction succeeds includes that the first event exists within the first preset duration.

In a possible implementation, the processing unit 1130 is further configured to query whether the first event exists within the first preset duration.

In a possible implementation, the transceiver unit 1120 is further configured to send a signature result to the third module. The signature result includes a signature for the first moment.

In a possible implementation, the transceiver unit 1120 is further configured to receive the signature result sent by the first module.

In a design, the apparatus 1100 may perform the steps performed by the third module in the foregoing embodiments.

The apparatus 1100 includes: a transceiver unit 1120, configured to receive a first control instruction sent by a second module; and a processing unit 1130, configured to execute the first control instruction if a first event exists within a first preset duration. The first preset duration is associated with a first moment and a second moment, the first moment is associated with a moment at which the first event occurs, the second moment is associated with the first control instruction, and the first event is associated with the first input.

In a possible implementation, the transceiver unit 1120 is further configured to receive a signature result sent by the second module. The signature result includes a signature for the first moment, and the first moment is associated with a moment at which the first event occurs. The processing unit 1130 is further configured to determine that a duration between the first moment and a third moment is less than or equal to a second preset duration. The third moment is associated with a moment at which the first control instruction is received.

In a possible implementation, the first event includes: input from a physical button, input from a touchscreen, or input from voice interaction.

Optionally, if the apparatus 1100 is in the transportation means 100, the processing unit 1230 may be the processor 131 shown in FIG. 1.

FIG. 12 is a diagram of another verification apparatus 1200 according to an embodiment of this application. The apparatus 1200 may be used in the transportation means 100 in FIG. 1.

The apparatus 1200 includes a memory 1210, a processor 1220, and a communication interface 1230. The memory 1210, the processor 1220, and the communication interface 1230 are connected through an internal connection path. The memory 1210 is configured to store instructions. The processor 1220 is configured to execute the instructions stored in the memory 1210, to control the communication interface 1230 to obtain information, or enable the apparatus 1200 to implement the foregoing verification method. Optionally, the memory 1210 may be coupled to the processor 1220 through an interface, or may be integrated with the processor 1220.

It should be noted that the communication interface 1230 uses a transceiver apparatus, for example, but not limited to, a transceiver. The communication interface 1230 may further include an input/output interface (input/output interface).

The processor 1220 stores one or more computer programs, and the one or more computer programs include instructions. When the instructions are run by the processor 1220, the verification apparatus 1200 is enabled to perform the verification method in the foregoing embodiments.

In an implementation process, steps in the foregoing methods can be implemented by using a hardware integrated logic circuit in the processor 1220, or by using instructions in a form of software. The method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 1210. The processor 1220 reads information from the memory 1210, and performs the steps of the foregoing methods in combination with hardware of the processor. To avoid repetition, details are not described herein again.

Optionally, the communication interface 1230 in FIG. 12 may implement the obtaining unit 1110 or the transceiver unit 1120 in FIG. 11, and the processor 1220 in FIG. 12 may implement the processing unit 1130 in FIG. 11.

Optionally, the apparatus 1100 or the apparatus 1200 may be a computing platform, and the computing platform may be an in-vehicle computing platform.

Optionally, the apparatus 1100 or the apparatus 1200 may be located in the transportation means 100 in FIG. 1.

Optionally, the apparatus 1100 or the apparatus 1200 may be the computing platform 130 in the transportation means in FIG. 1.

An embodiment of this application further provides a computer-readable storage medium. The computer-readable storage medium stores program code. When the computer program code is run on a computer, the computer is enabled to perform any method in FIG. 4 to FIG. 9.

An embodiment of this application further provides a computer program product. The computer product includes a computer program. When the computer program is run, a computer is enabled to perform any method in FIG. 4 to FIG. 9.

An embodiment of this application further provides a chip, including a circuit. The circuit is configured to perform any method in FIG. 4 to FIG. 9.

An embodiment of this application further provides a transportation means, including any verification apparatus in FIG. 11 or FIG. 12.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the mutual coupling or direct coupling or communication connection shown or discussed may be indirect coupling or communication connection through some interfaces, apparatuses, or units, and may be in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A verification method, applied to a first module and comprising:
obtaining a first event;
receiving first request information sent by a second module, wherein the first request information is used to request to verify validity of a first control instruction, and the first control instruction is associated with a first input;
determining that a duration between a first moment and a second moment is less than or equal to a first preset duration, wherein the first moment is associated with a moment at which the first event occurs, and the second moment is associated with a moment at which the first request information is received; and
sending first response information to the second module, wherein the first response information indicates that validity verification of the first control instruction succeeds.

2. The method according to claim 1, wherein before the determining that the duration between the first moment and the second moment is less than or equal to the first preset duration, the method further comprises:
verifying that the first request information is associated with the first event.

3. The method according to claim 1 or 2, wherein the first response information comprises a signature result, and the signature result comprises a signature for the first moment.

4. The method according to any one of claims 1 to 3, wherein the first event comprises: input from a physical button, input from a touchscreen, or input from voice interaction.

5. The method according to claim 4, wherein the first event comprises the input from the voice interaction, and the obtaining the first event comprises:
detecting a preset keyword, wherein the preset keyword comprises a wakeup word or a preset control instruction; and
obtaining the first event based on the preset keyword.

6. The method according to claim 5, wherein before the detecting the preset keyword, the method further comprises:
detecting, based on a digital signal processor DSP or a high-fidelity Hi-Fi chip, whether the voice interaction comprises the preset keyword.

7. A verification method, applied to a second module and comprising:
generating a first control instruction, wherein the first control instruction is associated with a first input; and
sending the first control instruction to a third module if a first event exists within a first preset duration, wherein the first preset duration is associated with a first moment and a second moment, the first moment is associated with a moment at which the first event occurs, the second moment is associated with the first control instruction, and the first event is associated with the first input.

8. The method according to claim 7, wherein before the sending the first control instruction to the third module, the method further comprises:
sending first request information to a first module, wherein the first request information is used to request to verify validity of the first control instruction; and
receiving first response information sent by the first module, wherein the first response information indicates that validity verification of the first control instruction succeeds, and that the validity verification of the first control instruction succeeds comprises that the first event exists within the first preset duration.

9. The method according to claim 7, wherein before the sending the first control instruction to the third module, the method further comprises:
querying whether the first event exists within the first preset duration.

10. The method according to any one of claims 7 to 9, wherein the method further comprises:
sending a signature result to the third module, wherein the signature result comprises a signature for the first moment.

11. The method according to claim 10, wherein before the sending the signature result to the third module, the method further comprises:
receiving the signature result sent by the first module.

12. A verification method, applied to a third module and comprising:
receiving a first control instruction sent by a second module; and
executing the first control instruction if a first event exists within a first preset duration, wherein the first preset duration is associated with a first moment and a second moment, the first moment is associated with a moment at which the first event occurs, the second moment is associated with the first control instruction, and the first event is associated with the first input.

13. The method according to claim 12, wherein before executing the first control instruction, the method further comprises:
receiving a signature result sent by the second module, wherein the signature result comprises a signature for the first moment; and
determining that a duration between the first moment and a third moment is less than or equal to a second preset duration, wherein the third moment is associated with a moment at which the first control instruction is received.

14. The method according to claim 13, wherein the first event comprises: input from a physical button, input from a touchscreen, or input from voice interaction.

15. A verification apparatus, comprising:
an obtaining unit, configured to obtain a first event;
a transceiver unit, configured to receive first request information sent by a second module, wherein the first request information is used to request to verify validity of a first control instruction, and the first control instruction is associated with a first input; and
a processing unit, configured to determine that a duration between a first moment and a second moment is less than or equal to a first preset duration, wherein the first moment is associated with a moment at which the first event occurs, and the second moment is associated with a moment at which the first request information is received; and
the transceiver unit is further configured to send first response information to the second module, wherein the first response information indicates that validity verification of the first control instruction succeeds.

16. The apparatus according to claim 15, wherein
the processing unit is further configured to verify that the first request information is associated with the first event.

17. The apparatus according to claim 15 or 16, wherein the first response information comprises a signature result, and the signature result comprises a signature for the first moment.

18. The apparatus according to any one of claims 15 to 17, wherein the first event comprises: input from a physical button, input from a touchscreen, or input from voice interaction.

19. The apparatus according to claim 18, wherein the first event comprises the input from the voice interaction; and
the obtaining unit is specifically configured to:
detect a preset keyword, wherein the preset keyword comprises a wakeup word or a preset control instruction; and
obtain the first event based on the preset keyword.

20. The apparatus according to claim 19, wherein
the processing unit is further configured to detect, based on a digital signal processor DSP or a high-fidelity Hi-Fi chip, whether the voice interaction comprises the preset keyword.

21. A verification apparatus, comprising:
a processing unit, configured to generate a first control instruction, wherein the first control instruction is associated with a first input; and
a transceiver unit, configured to send the first control instruction to a third module if a first event exists within a first preset duration, wherein the first preset duration is associated with a first moment and a second moment, the first moment is associated with a moment at which the first event occurs, the second moment is associated with the first control instruction, and the first event is associated with the first input.

22. The apparatus according to claim 21, wherein
the transceiver unit is further configured to:
send first request information to a first module, wherein the first request information is used to request to verify validity of the first control instruction; and
receive first response information sent by the first module, wherein the first response information indicates that validity verification of the first control instruction succeeds, and that the validity verification of the first control instruction succeeds comprises that the first event exists within the first preset duration.

23. The apparatus according to claim 21, wherein
the processing unit is further configured to query whether the first event exists within the first preset duration.

24. The apparatus according to any one of claims 21 to 23, wherein
the transceiver unit is further configured to send a signature result to the third module, wherein the signature result comprises a signature for the first moment.

25. The apparatus according to claim 24, wherein
the transceiver unit is further configured to receive the signature result sent by the first module.

26. A verification apparatus, comprising:
a transceiver unit, configured to receive a first control instruction sent by a second module; and
a processing unit, configured to execute the first control instruction if a first event exists within a first preset duration, wherein the first preset duration is associated with a first moment and a second moment, the first moment is associated with a moment at which the first event occurs, the second moment is associated with the first control instruction, and the first event is associated with the first input.

27. The apparatus according to claim 26, wherein
the transceiver unit is further configured to receive a signature result sent by the second module, wherein the signature result comprises a signature for the first moment; and
the processing unit is further configured to determine that a duration between the first moment and a third moment is less than or equal to a second preset duration, wherein the third moment is associated with a moment at which the first control instruction is received.

28. The apparatus according to claim 27, wherein the first event comprises: input from a physical button, input from a touchscreen, or input from voice interaction.

29. A verification apparatus, comprising a processor and a memory, wherein the processor is coupled to the memory, and is configured to read and execute instructions in the memory, to perform the method according to any one of claims 1 to 6.

30. The apparatus according to claim 29, wherein the apparatus is a device that has a trusted execution environment.

31. A verification apparatus, comprising a processor and a memory, wherein the processor is coupled to the memory, and is configured to read and execute instructions in the memory, to perform the method according to any one of claims 7 to 11.

32. A verification apparatus, comprising a processor and a memory, wherein the processor is coupled to the memory, and is configured to read and execute instructions in the memory, to perform the method according to any one of claims 12 to 14.

33. A computer-readable storage medium, wherein the computer-readable storage medium stores program code, and when the computer program code is run on a computer, the computer is enabled to perform the method according to any one of claims 1 to 14.

34. A chip, comprising a circuit, wherein the circuit is configured to perform the method according to any one of claims 1 to 14.

35. A transportation means, comprising the apparatus according to any one of claims 15 to 32.
